# EUROPEAN PATENT APPLICATION

(11) **EP 2 224 739 A1**
(43) Date of publication of application: **01.09.2010**
(21) Application number: 09250542.9
(22) Date of filing: 27.02.2009
(51) Int. Cl.: H04N 7/01

(54) **Image processing apparatus**

(71) Applicant: NXP B.V., 5656 AG Eindhoven (NL)
(72) Inventor: Riemens, Abraham, Redhill, Surrey RH1 1DL (GB); Dijkstra, Henk, Redhill, Surrey RH1 1DL (GB); Wüst, Clemens, Redhill, Surrey RH1 1DL (GB)
(74) Representative: Williamson, Paul Lewis

(57) **Abstract**

A method of identifying a periodic pattern of image repetition within a succession of video images comprising receiving a signal indicative of one or more difference values that represent a degree of difference between images in the succession of video images, forming a sequence of difference values, and processing a subset of the sequence of difference values in order to generate an identifier of the periodic pattern.

## Description

This invention relates to image processing apparatus and a method of operating image processing apparatus, in particular an apparatus and method for identifying a periodic pattern of image repetition that has been used to adjust an image rate when generating video image content for distribution.

During video image content production, a film cadence may be introduced. The film cadence can define a pull-down pattern that is used to adjust the frame rate of the original video image data so that it is suitable for distribution. "Pull-down" consists of repeating an image a plurality of times in order to increase the overall image rate.

When a movie is recorded, it is traditionally recorded at a rate of 24 images per second This is in contrast to broadcasting standards which define an image transmission rate of 50 Hz or 60 Hz, depending upon the country. In order to convert from the recorded 24 images per second to the 50 or 60 images per second defined by the standard, a repetition of the recorded frames is typically used. In addition, it is known for a content provider to convert from 24 images per second to 25 images per second by running the film slightly faster and accepting the disadvantages of a 4% increase of speed and an adapted pitch of sound. Each of the images at the 25 images per second rate can then be repeated twice in order to further up-convert the image rate to 50 images per second for distribution.

As another example, in the United States and other countries where televisions use 60 Hz vertical scanning frequency, video is broadcast at about 60 images per second. For the film's motion to be accurately rendered on the video signal, a technique called 3:2 pull-down is used to convert from 24 images per second to 60 images per second. That is, the first recorded image is repeated three times, the second recorded image is repeated twice, the third recorded image is repeated three times, the fourth recorded image is repeated twice, etc. In this way, the recorded image rate of 24 images per second can be converted to an image rate of 60 images per second for transmission to a television set.

In addition to being able to receive recorded video image content that has been frame rate converted as described above, a television set is also capable of receiving native video source content such as news reading footage, soap operas, reality television programmes, and sports events.

Native video source content differs from pull-down source content because it is generated/captured directly at the broadcast frequency of 50 or 60 images per second. That is, a pull-down is not required during content production to convert the image rate of the live image data before it is broadcast to a television set. All of the images are independent of each other.

When a television set receives a video image signal, it should know the temporal characteristics of the signal, for example whether or not any of the original frames have been repeated, and if they have, which pull-down pattern has been used. This is necessary in order to accurately perform subsequent operations on the video image data. Examples of such subsequent operations can include temporal operations such as frame rate conversion and/or de-intenadng. Modem television sets may receive input video image content at a frame rate of 50 or 60 images per second, and display at 100 or 120 images per second or even at 200 or 240 images per second. That is, the image rate is up-converted by a factor of two or four locally at the television set.

In order to perform such up-conversion accurately, the television set must know which, if any, pull-down pattern has been used when generating the video image content.

A signal indicative of one or more difference values between video images may be received directly or indirectly from a difference detector, and a difference detector is known to generate erroneous difference values. This can be the case where noise and quantization of the received images can introduce errors, and also for video images that portray very little motion (that is, a small region of the image is moving and/or any motion that is present is slow). This is because the difference detector can have difficulty in determining whether a current image is a repetition of an earlier image or is a new image that is similar to the earlier image. Such situations can make difference detection unreliable and therefore effect pattern detection.

A pull-down pattern called "telecine-B" has been developed to perform a direct conversion from 24 Hz to 50 Hz using a pull-down pattern of: 2:2:2:2:2:2:2:22:2:2:3. This pattern has received particular interest as it appears as one of the Phase Alternating Line (PAL) test signals on the HQV DVD which is currently widely used as a consumer benchmark test set. Other long patterns can originate from animation content, and can include pull-down patterns of 5:5 or 6:4 to convert from 12 Hz to 60 Hz and 7:8 to convert from 8 Hz to 60 Hz for example.

For the detection of telecine-B and other long patterns, a difference detector must reliably detect differences in a sequence of 25 images as telecine-B has a pattern length of 25. If the difference detector fails in only one of these difference calculations (either erroneous difference detection or erroneous equal detection), then the telecine-B pattern will not be recognized. This can lead to unstable film detection, which can be especially disadvantageous for long patterns, which can have a duration of 0.5 seconds for a sequence length of 25 images that are displayed at 50 images/sec. The film detection operation can typically take one or two pattern lengths to recognize a pattern, and during this time the video processing can show film judder or compensate for film judder with a switching interval from 0.5 seconds to a few seconds. This can cause motion judder artefacts that degrade the quality of the images that are displayed to a viewer.

Document WO 2004/049698 (Koninklijke Philips Electronics NV) discloses motion sequence pattern detection. The motion sequence pattern detector detects a periodic pattern of motion sequences within a succession of video images and comprises a motion detection unit. The detector also includes a pattern recognition unit for detecting the periodic pattern by comparing the number of sequences of the motion detection signals for the pairs of images with a predetermined sequence. If for one of the number of sequences the periodic pattern is detected, then a final output is generated which indicates that the succession of video images corresponds to film mode.

It is an object of the invention to address one or more problems associated with the above discussion.

The listing or discussion of an apparently prior-published document in this specification should not necessarily be taken as an acknowledgement that the document is part of the state of the art or is common general knowledge.

According to a first aspect of the invention, there is provided a method of identifying/detecting a periodic pattern of image repetition within a succession of video images comprising:
receiving a signal indicative of one or more difference values that represent a degree of difference between images in the succession of video images;
forming a sequence of difference values; and
processing a subset of the sequence of difference values in order to generate an identifier of the periodic pattern.

In some embodiments, the method may comprise receiving a sequence of difference values, and the step of forming the sequence of values may not be required.

Processing a subset of the difference values can provide a more robust and/or accurate method of film detection and pattern identification. The subset can include some, but not all, of the sequence of difference values. The robustness of the processing can be considered as the likelihood that an erroneous difference value is not processed. The reliability of the processing can be considered as a measure of the likelihood that a periodic pattern is correctly identified.

Embodiments of the invention can be particularly advantageous for pattern detection of pull-down patterns that are long, such as a telecine-B pattern. Processing a subset of the sequence of difference values can also be advantageous in embodiments where a difference detector is used that is known to be imperfect, and is known to generate erroneous results as the errors experienced when processing long periodic patterns can cause significant visual artefacts when the video images are displayed.

It will be appreciated that the term "image" can represent a frame of video image data, or a single field that contains the odd or even lines of the image that have been generated by the process of interlacing. The periodic pattern may also be known as a pull-down pattern. The periodic pattern of image repetition may be a pattern of motion sequences.

Forming a sequence of difference values may comprise associating the one or more difference values such as storing the difference values in computer memory in chronological order. This may provide a history of difference values. The difference detector may provide a current difference value, which the pattern detector can store in memory in association with earlier difference values in order to build up a sequence of difference values.

The identifier of the periodic pattern may be of any format that enables subsequent processing to be performed on the video images in line with the identified periodic pattern, or native video source content if no periodic pattern is identified.

It will be appreciated that the difference detector may be of any suitable form, and may comprise determining a degree of similarity (or differences) between images based upon pixel values, motion vectors, a transform such as a discrete cosine transform, etc.

Furthermore, the difference detector may be configured to generate difference values for all of an image or a sub-region of video images. For example, the video images may comprise ticker tape or blank areas at the top and bottom, or sides, of the images. In other examples, the video images may represent moving images within the video images (that is motion within motion), such as a display of a big screen at a sports stadium. In such examples, it may be required to process only a sub-region of the video images.

Processing the subset of difference values may comprise comparing one or more difference values with a plurality of difference value templates representative of potential/expected periodic patterns. In this way, a match between the received sequence and one of the potential periodic patterns can be identified, and can enable efficient processing of the subset of sequence of difference values as only specific pattern templates can be considered. This can reduce the possibility that unnecessary processing is performed in some specific applications.

The potential periodic patterns may comprise all known periodic patterns. In some embodiments, the potential periodic patterns with which the subset of difference values are processed can be dynamically adjusted in accordance with operating characteristics such as the image display rate of a display device. For example, a 3:2 pull-down pattern may be excluded from a subset of knownlexpected patterns if the display device is configured to receive video images at 60 images per second, as such a pull-down pattern would not be appropriate. The potential periodic patterns can be limited to only those periodic patterns that provide an appropriate image-rate up-conversion factor based on the received image rate. In some embodiments, a periodic pattern may only require to be distinguished from some, but not all, of the difference value templates.

The processing may comprise recognising a number of high and low difference values over time, and comparing the recognised high and low values with high and low values representative of a known periodic pattern.

The subset of difference values may comprise the minimum number of difference values that are required to uniquely distinguish a periodic pattern, optionally distinguish a periodic pattern from each or a subset of the difference value templates. In this way, the processing of difference values that may contain erroneous results can be reduced and/or avoided as difference values at phase locations that cannot uniquely distinguish a periodic pattern are not considered. Processing the difference values can involve matching a received difference value with a difference value of a known periodic pattern.

The subset of difference values can be selected from the sequence of difference values in order to satisfy a balance between accuracy of correct pattern identification and robustness. A desired balance between accuracy and robustness can depend upon the nature of one or more subsequent operations, and/or can be responsive to user input indicative of a required reliability and/or robustness that is required. For example, highly accurate pattern identification may be more important than robustness for subsequent de-interlacing operations.

The processing may comprise checking for an expected value detection, which may be a "new frame" detection or a "repeat frame" detection, in a known periodic pattern at specific locations in the sequence of difference values and/or may comprise counting the number of expected value detections between specific locations in the sequence of difference values. A location in the sequence of difference values may be known as a phase, and in some embodiments may be a bit position in a binary string. For example, a 3:2 pull-down pattern has five phases. The method may further comprise checking the counted number of "new frame" detections against a minimum value that is known for a specific periodic pattern.

The method may comprise matching characteristics of received difference values with an expected pattern of difference values. The characteristics may include matching individual patterns, sub-patterns and an indication of how often a sub-pattern occurs, for example.

The processing may comprise:
a) processing a first subset of the sequence of difference values if an identity of the current periodic pattern has not been identified; and
b) processing a second subset of the sequence of difference values if an identity of the current periodic pattern has been identified.

The second subset of the sequence of difference values may consist of fewer difference values than the first subset of the sequence of difference values, and this may enable a less rigorous check of the sequence of difference values to be performed when a current periodic pattern has already been indetified. The first subset of the sequence of difference values may comprise a full set of sequence values for a known periodic pattern.

The processing may comprise adjusting the number of difference values in the subset of the sequence of difference values over time, and may also comprise increasing the size of the subset if the current identity of the periodic pattern is not confirmed by earlier processing after a predetermined period of time. In this way a more rigorous check of the sequence of difference values may be performed if confidence in the processing of the sequence reduces, and vice versa.

In some embodiments, a periodic pattern may be expected to be applied for a period of time of the order of minutes, and a predetermined period of time that is allowed to lapse before adjusting the size of the subset of the sequence of difference values may be of the order of seconds. In other embodiments, for example during a commercial break in a television programme where the periodic pattern may change more frequently, the appropriate periods of time can be adjusted accordingly.

Generating an identifier of the periodic pattern may comprise providing an identifier of a periodic pattern if an identifier has not already been generated, and may also comprise providing a confirmation that the previously generated identifier is still correct The method may further comprise maintaining the same identification of the periodic pattern if processing of the sequence of difference values indicates that the video images do not represent motion, and/or the processing of the sequence of difference values otherwise does not indicate a different periodic pattern is being used.

The method may further comprise providing a reliability indicator indicative of a calculated reliability of the periodic pattern identity. The calculated reliability may be in accordance with the size of the subset of difference values that are processed.

The method may comprise identifying a telecine-B pattern, which may have a length of 25 consecutive images, a periodic pattern generated by image rate converting an animation, or any other periodic pattern. The method may be particularly applicable to long patterns as the likelihood of an erroneous difference value occurring in a long pattern can be greater than a short pattern. The reliability of a long pattern may be considered to be less than a short pattern, and the time taken to correctly identify a long pattern can also be longer than for a short pattern that can lead to artefacts being displayed to a viewer of the video images whilst the pattern is being correctly detected.

The method may further comprise performing a subsequent operation on the succession of video images in accordance with the identified pattern. The subsequent operation may be a temporal processing operation, such as frame rate conversion or de-interlacing for example.

According to a second aspect of the invention, there is provided an apparatus comprising:
a receiver configured to receive a signal indicative of one or more difference values that represent a degree of difference between images in the succession of video images; and
a processor configured to form a sequence of difference values and process a subset of the sequence of difference values in order to identify a periodic pattern of image repetition within the succession of video images.

The apparatus may be a film detector component that may be embodied in hardware or software, or a combination of the two.

There may be provided a display data generation device comprising a film detector component comprising any apparatus disclosed herein. The display data generation device may be a television set, a computer monitor, a DVD player, a video player, a bluray device, or any other play-back device.

There may be provided a computer program configured to perform any method disclosed herein, or to configure any apparatus disclosed herein. The computer program may be stored on a data carrier, such as flash memory, a disc, or may be embodied on a transient carrier such as a signal, for example as a network download, including an Internet download.

One or more embodiments described herein can allow a balance/trade-off between robustness of the pattern detector against the accuracy/sensitivity for errors from the difference detector.

In some embodiments all of the difference values relating to a pattern can be initially processed, but it is only processing of the subset of the sequence of difference values that can lead to the generation of an identifier of the periodic pattern.

The invention will now be described in detail by way of example only, with reference to the appended drawings, in which:
Figure 1 illustrates schematically a sequence of images that have been image-rate up-converted using a 3:2 pull-down pattern;
Figure 2 illustrates schematically an apparatus according to an embodiment of the invention; and
Figure 3 illustrates schematically a process flow according to an embodiment of the present invention.

One or more embodiments described herein relate to a pattern detector that can process a signal received from a difference detector of a film detector, in order to identify a periodic pattern of image repetition within a succession of video images such that subsequent processing can be accurately performed. The periodic pattern may also be known as a pull-down pattern. Pattern detection can involve identifying an association between a subset of a sequence of difference values received from the difference detector with a list of anticipated/expected patterns that are stored in computer memory. In this way a pattern represented by the sequence of difference values can be recognised/identified.

One or more embodiments can be used before subsequent processing operations are performed on the video images, and the subsequent processing can include temporal processing wherein knowledge of the pull-down pattern that has been used is particularly important.

Embodiments described herein may provide a more robust and reliable pattern detector compared with the prior art.

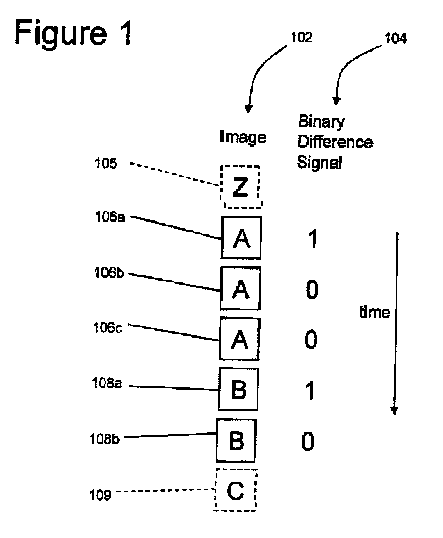

Figure 1 illustrates schematically a 3:2 pull-down pattern. Figure 1 illustrates five consecutive images 102 that have been received by a film detector component in a television set along with a previous image 105 and a next image 109. A binary difference signal 104 that is generated by the processing of a difference detector in a film detector is also shown.

The first image that is received is image "A" 106a. The associated bit position of the binary difference signal has a value of "1" as the first image 106a is different to the previous image 105.

The second received image is a repetition of image "A" and is given reference 106b. This time, the binary difference signal 104 has a value of "0" as the second image is the same as the immediately previous image.

The third image that is received is again a repetition of image "A" and is given reference 106c. Again, the binary difference signal 104 has a value "0" as the third image 106b is the same as the second image 106b.

The fourth image that is received is the first occurrence of image "B", and is given reference 108a. The associated bit position of the binary difference signal 104 is given a value of "1" as the fourth image 108a is different to the third image 106c,

The fifth image received is a repetition of the fourth image "B", and therefore the binary difference signal 104 has a value of "0".

It will be appreciated that in this embodiment the difference detector generates a binary sequence of difference values, wherein a "1" indicates that the current image is different to the immediately previous image, and a "0" indicates that the current image is the same as the immediately previous image. In this way, a 3:2 pull-down pattern can be represented as a repetition of the binary pattern "10010"; a 2:2 pull-down pattern can be represented as a repetition of "10"; etc.

It will be appreciated that other embodiments of a difference detector may compare a current image to a pre-previous image: that is the image before the immediately previous image. In such an example, a 3:2 pull-down pattern can be represented by a repetition of the binary code "11011". Such a comparison can be advantageous in examples that receive interlaced input signals at the film detector.

In further still embodiments, the difference detector may generate a signal that is not binary. For example, the signal may comprise a sequence of probability values that indicate the probability that the current image is different to an earlier image (or a probability that the two images are the same). In such embodiments, the pattern detector may process a plurality of these probability values over time in order to identify a pattern.

It will be appreciated that different difference detectors that can generate different "difference value signals" can be used with embodiments of the invention. The difference detector should output a sequence of signals/values that are indicative of the amount of difference between a current image and an earlier image in any format For example, a pattern detector may recognise a pattern of high/low values over time, and sequences such as "10010" can be written as "HLLHL", with H representing high, and L representing low, differences.

The difference detector may generate difference values based on processing of pixel values, motion characteristics or any other properties of video image data.

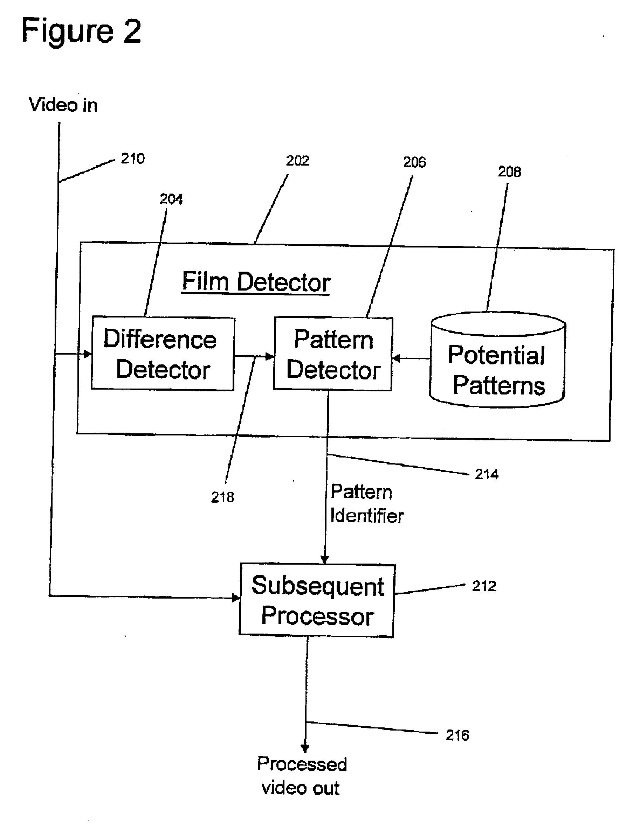

Figure 2 illustrates schematically a film detector component 202 according to an embodiment of the invention. It will be appreciated that the film detector 202 can be embodied as hardware or software, or a combination of the two. The film detector 202 is configured to receive a video-in signal 210 and output a pattern identifier 214 indicative of a mode of image content production that has been identified/recognised from the succession of video images received as the video input 210. The mode of image content production may be a native video source comprising no repetition of images, or pull-down source where the image rate has been increased by applying a pull-down pattern. The pattern identifier may be indicative of whether or not a pull-down pattern has been used, which pull-down pattern has been used, and the current phase location in the pull-down pattern.

The pattern identifier 214 may be in any format that can be recognised for subsequent processing by a processor 212 in order to perform an operation on the video-in images 210 that is consistent with a pull-down mode that has been used, if there is one. As an example, the pattern identifier may comprise an indication of the length of the pull-down pattern, a representation of the difference values of the pull-down pattern, and a current phase in the pull-down pattern. For native video source, where no image repetition is present, this may be identified as a pull-down pattern with a length of 1, a binary representation of "1" (that is each image is different to an earlier image), and a phase of "0" (that is, the phase is always at the start of a periodic pattern having a length of one).

In other embodiments, the pattern identifier may comprise an identifier of the pull-down pattern without necessarily repeating a difference value representation of the pattern in full.

The film detector 202 is configured such that a difference detector 204 processes the video-in signal 210 in order to generate a sequence of difference values that are indicative of the similarity or difference between a current image and an earlier image. An example of a binary difference signal is illustrated in Figure 1, and can be generated by comparing pixel values of the current image with the immediately previous image, as a simple example.

The difference detector 204 generates difference values 218 that are provided as an input to the pattern detector 206. The difference detector 204 may generate a single difference value at a time, which can be stored in memory at the pattern detector 206 in order to form a sequence of difference values. It will be appreciated that the sequence of difference values can be formed and stored in memory at any location such that they can be retrieved for processing by the pattern detector 206.

The pattern detector 206 is configured to compare a subset of the sequence of difference values 218 with one or more difference value templates representative of known/expected periodic patterns that are stored in computer memory 208. The templates may be referred to as potential pattern identifiers. The subset can include some, but not all, of the sequence of difference values 218. The pattern detector 206 can be more robust when compared with prior art examples as it only checks part of the sequence of difference values 218. This part, or subset, of the pattern should be sufficiently complete to uniquely distinguish each potential pattern from all of the other patterns that are stored in computer memory 208, or at least all of the patterns that are considered relevant for a given application. The subset may be selected such that unnecessary processing of other parts of the sequence of difference values that may not lead to a conclusive identification of the pattern is reduced, and the probability of encountering an erroneous difference value that has been generated by a difference detector may also be reduced.

An example of how to identify a pull-down pattern of 7:8 according to an embodiment of the invention is now provided. In this example, thirty bit positions in a sequence of binary difference values are illustrated, and the 7:8 pull-down pattern needs to be distinguished from alternative pull-down patterns of 2:2, 3:2 and 2:3. In this way a television set, for example, can identify a pull-down pattern that has been used during content generation so that subsequent processing operations performed locally at the television set can utilise knowledge of the pull-down pattern in order to be able to function correctly.

For a 7:8 pull-down pattern, we illustrate below in underlining an example of an identification of a minimum number of bit positions (corresponding to a relative location of an image from a succession of video images) that need to be processed in order to distinguish the 7:8 pull-down pattern from 2:2, 3:2, 2:3 and native video patterns. It will be appreciated that the below sequences of binary bit values are examples of difference value templates representative of known periodic patterns:

| | |
|---|---|
| 7:8- | 100000010000000100000010000000 |
| 2:2-phase 0 | 101010101010101010101010101010 |
| 2:2-phasel 1 | 010101010101010101010101010101 |
| 3:2-phase0 | 100101001010010100101001010010 |
| 3:2-phase 1 1 | 001010010100101001010010100101 |
| 3;2 - phase 2 | 010100101001010010100101001010 |
| 3:2-phase3 | 101001010010100101001010010100 |
| 3:2-phase4 | 010010100101001010010100101001 |
| native video- | 111111111111111111111111111111 |

In this example, the first, sixth, eighth, sixteenth, twenty first and twenty third positions of a received sequence of difference values are compared with the difference value templates shown above in order to uniquely identify which of the pull-down patterns (7:8, 2:2, 3:2, 2:3 or native video) is represented by the received sequence of difference values.

As will be appreciated, processing can comprise comparing the received difference values with phase-shift version of expected periodic patterns.

Representing native video source as a pull-down code of all 1's can be advantageous because it can allow any subsequent processing operations (such as frame rate conversions and de-interlacing) to be performed in the same way independently of whether native video source or pull-down source content is received. That is, the processing can be performed using the binary sequence indicative of "new frames" (binary 1) and "repeat frames" (binary 0) in the same way.

In other embodiments, and in order to improve reliability, it may be preferred to process/check a larger subset of difference values in order to identify a 7:8 pattern. Processing a larger subset of difference values may be considered as reducing the robustness of the pattern detection as it may be more likely that an erroneous difference value is encountered. The size of the subset that is used can be selected and/or varied in order to meet the specific requirements of reliability and robustness for a specific application.

In some embodiments, the pattern detector identifies a current phase (location) within the periodic pattern in addition to identifying the type of periodic pattern. An example method of determining the phase of the periodic pattern includes performing matching operations with the received difference values and time shifted versions of the expected/known periodic patterns. The matching operations may be performed in parallel. Alternatively, the start of a received periodic pattern (that is: phase 0) can be determined by processing the received difference values in order to identify a repetition period, and then associating the first location in the recognized repetition pattern as the first phase (phase 0).

In some embodiments, identifying a 7:8 pull-down pattern that corresponds to a received sequence of difference values can include adding a check for "0's" in the received binary sequence of difference values. Additionally, or alternatively, a check that at least a predefined number of "0's" are received between successive "1's" in the received sequence of difference values can be performed.

Another example according to an embodiment of the invention can include identifying the presence of a telecine-B pull-down pattern (2:2:2:2:2:2:2:2:2:2:2:3) in a received sequence of difference values.

The telecine-B pattern is represented by "1010101010101010101010100" as a sequence of binary difference values. In such a sequence of received images, the pattern can be recognized by identifying the part of the pattern identified below that is underlined, which relates to the "3" in the associated pull-down pattern notation:
010101010101001010101010101010101010100101010

If a more reliable check is required, a further check of the following underlined part of the pattern can be performed:
010101010101001010101010101010101010100101010

In this way, a confirmation check is performed that a "2" as represented by the pull-down pattern notation is present at predetermined locations between consecutive "3's".

In the same way as described above in relation to the pull-down pattern associated with a 7:8 pattern, an additional check that a certain number of "10's" ("10's" in this binary representation correspond to "2's" in the pull-down pattern notation) are present between consecutive "100's" (corresponding to "3's" in the pull-down pattern notation).

Embodiments of the pattern detector 206 described herein can enable robust and reliable pattern detection and can provide advantages for systems where errors in the sequence of difference values 218 are known to be generated by the difference detector 204. Errors in the sequence of difference values 218 can be generated due to noise (such as analogue noise and/or digital coding artefacts).

The sequence of difference values 218 may be particularly susceptible to errors when processing video images that portray very little motion (that is, a small region of the image is moving and/or any motion that is present is slow). This is because the difference detector can have difficulty in determining whether a current image is a repetition of a earlier image or is a new image that is similar to the earlier image. Such situations can make difference detection unreliable.

The traditional approach of film detection aims for matching at least one full occurrence of a film pattern. For long film patterns (such as telecine-B or animation originating codes), pattern detection becomes more sensitive to the quality of the difference detectors and can take a relatively long time as a complete sequence of images represented by the telecine-B pattern can represent 0.5 seconds of time.

As an example, let us assume that the difference detector has an error probability of 1%. For a short pattern with a length of five consecutive images (such as a pull-down pattern of 3:2), this results in a probability of 95% (0.99⁵) that no incorrect difference values occur in a single pattern, and hence the pattern is correctly recognised. In contrast, for a long pattern that corresponds to a length of 25 consecutive images (such as the telecine-B pattern of 2:2:2:2:2:2:22:2:2:2:3), this results in a probability of 78% (0.99²⁵) that no incorrect difference values occur in a single pattern. The consequence of incorrect film detection can be severe, as subsequent de-interlacing or image rate conversion functions may be performed incorrectly thereby causing severe image artefacts.

Embodiments of the invention process a subset of the received video images such that the probability of erroneously recognising a pattern can be reduced. In this way, the selection of the subset images that are processed can be made such that each of the patterns can be uniquely identified from each other but without unnecessarily processing difference values at image positions that do not differentiate a pattern from another pattern. In this way, pattern recognition can be made more robust.

In some embodiments, at least two types of processing operations can be available to identify a pattern. Firstly, a processing operation that comprises a check for an expected difference value detection such as a "new image" detection (for example a "1" in a binary sequence of difference values) or a "repeat image" detection (for example a "0") at some predetermined phases in the pattern. The predetermined phases can relate to the image locations in time, and can be bit positions in binary notation. Secondly, a processing operation may comprise performing a count of the number of correct difference value detections between some phases (bit positions) in the pattern, and checking this against a minimum expected value.

In both cases, it is possible to vary the size of the subset that is processed (which can be considered as 'completeness' of the pattern check) by increasing or decreasing the number of comparisons/counts that are performed. This can allow a balance/trade-off between robustness of the pattern detector and the sensitivity to errors in the difference detector to be achieved.

As another variation, the processing that is performed to identify/distinguish a pattern for the first time (for example, making a decision that requires a switch to a different pattern than the one that had previously been identified) can be different to the processing that is performed when the film detector has already identified a pattern. In situations where a pattern has already been identified, a confirmation that the signal is still running according to the pattern may be required and may involve a less rigorous check than when a pattern is first identified. A less rigorous check may involve processing a smaller subset of the sequence of difference values. In some embodiments, detection of a certain periodic pattern may cause processing of a specific subset of the sequence of difference values to be performed. For example, if an "unusual" pattern is detected, then a more rigorous check of a relatively large subset of difference values may be performed. Such processing may be considered as involving hysteresis in order to improve the stability of the detector.

In some embodiments, a more complete/strict pattern match may be required before switching to a different pattern. In order to perform a confirmation that the previously identified pattern is still valid, a less thorough match may be considered sufficient, that is processing of a smaller subset of the sequence of difference values.

A pattern detector according to an embodiment of the invention can be configured to stay in a present film mode (that is without selecting a different pull-down pattern) even during the temporary absence of input from the difference detector that can be recognized as relating to a known pull-down pattern. In other words, the pattern detector can continue to identify a present film mode, when the processing of the received sequence of difference values cannot identify information relating to a different pull-down pattern, or any pull-down pattern whatsoever. In such case, the size of the subset that is processed (which can be considered as 'completeness' of the pattern check) can be varied depending on the duration of the absence of good input

It is possible that the difference detector signal cannot detect any motion at all, that is a sequence of difference values are generated that indicates that each of the images is the same as the previous image. In such case, a pattern detector according to an embodiment of the invention may generate an indication that the previously recognized pattern has not changed, thereby assuming that the pattern continues in case of absence of motion. In such an example the difference detector may only outputs "0's" as the new frame flag/binary sequence of difference values.

A film detector according to an embodiment of the invention can also output a reliability measure that can be used by one or more further processing operations. The reliability measure may be a reliability indicator indicative of a calculated reliability of the periodic pattern identity and may be generated by the pattern detector. The pattern reliability measure can depend on the percentage of correct new frame flags and/or can be generated in accordance with the size of the subset that is processed. For example, a subset that consists of 80% of the total identified periodic pattern length may be considered more accurate but less robust than a subset that consists of 60% of the total length and can be attributed a pattern reliability measure value accordingly. A subset that consists of 80% may be considered less robust because it is more likely to encounter an erroneous difference value that has been generated by the difference detector. Overall, the reliability measure of the pattern detector may be proportional to the accuracy provided by the subset of sequence of values, although in other embodiments it may be considered as proportional to the robustness provided.

In some embodiments, the difference detector may also generate a difference reliability value, and this can be used in combination with the pattern reliability measure. For example, the difference reliability may be given a 60% weighting towards the overall reliability and the pattern reliability measure may be given a 40% weighting.

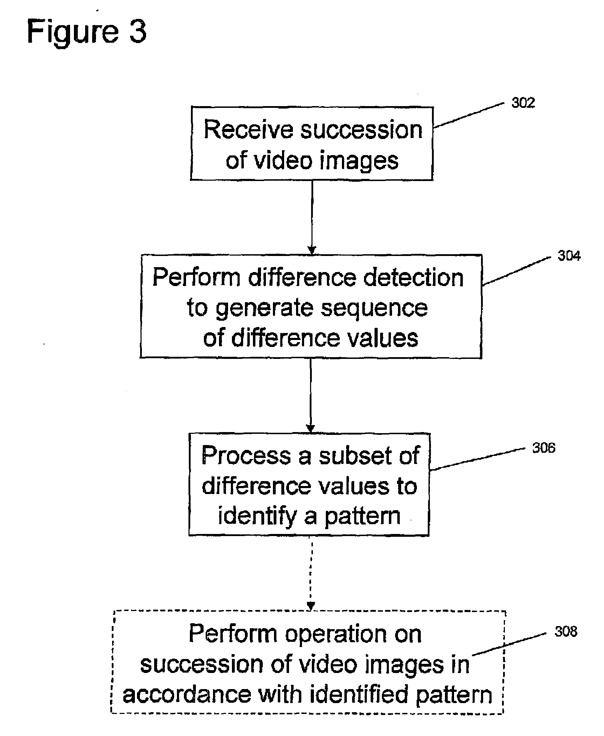

Figure 3 illustrates schematically a process flow representing a method according to an embodiment of the invention. The method begins at step 302 where a succession of video images are received. The succession of video images may represent distributed pull-down source image data that has been image rate up-converted using a pull-down pattern.

At step 304, difference detection is performed in order to generate a sequence of difference values. The sequence of difference values can be of any format as described above, in particular in relation to Figure 1.

A subset of the sequence of difference values is processed at step 306 in order to identify a periodic pattern, such as a pull-down pattern, that has been used to image rate up-convert original recorded image data in order to provide video image data that is suitable for broadcasting.

Optionally at step 308, one or more subsequent processing operations can be performed on the received video images in accordance with the identified pattern.

A further example of identifying a telecine-B pull-down pattern is now provided. As discussed above, a pull-down pattern (such as 3:2) can also be expressed as a sequence of difference values. It will be appreciated that the following example is also therefore related to difference values.

If a pattern detector is not in telecine-B mode, then it will regularly check if it can enter telecine-B mode. To enter telecine-B mode, the detector has to recognize the pull-down pattern 3:2:22:2:2:2:2:2:2:2:2:3 in the image repeat history. If a 3-image repeat has just been added to the image repeat history, then the detector will check if there are exactly eleven 2's before the current 3, and that there was also a 3 immediately before the eleven 2's. If this is the case, then the detector enters telecine-B mode and generates an identifier that can be recognized as such and identifies the first image after the 3 frame repetition as the image at the first phase in the pattern. In this example, the detector may not allow for incorrect new- image information.

If the detector is in telecine-B mode, then it will regularly check whether or not it can stay in this mode. In contrast to the procedure for entering telecine-B mode, the detector may now allow for errors in the new- image information. There may be at least two conditions that have to be satisfied to stay in telecine-B mode:
- If the phase for the current image is 2, then the current image has to be a new image.
- If the phase for the current image is 2, then the two most recently added numbers in the image repeat history have to be 3 and 2, or 2 and 3.

If either of these two conditions fails, then the detector may fall out of telecine-B mode. The detector may allow, for example, that the image repeat count 2-2 be detected as 3-1 or 4, or 2-2-2-2 to be detected as 3-1-1-3 or 1-7, for example. Also, the detector can allow the expected new- image information in the phases 22, 23, 24, 0, 1, and 2 of the Telecine-B pattern to be identified as relating to telecine-B when given values of 1-0-1-0-0-1 even though they should be 1-0-0-1-0-1. This can take into account particular known erroneous difference values that are generated by difference detectors for example in relation to interlaced images.

If the detector frequently detects telecine-B mode and shortly thereafter falls out of telecine-B mode, then it can be advantageous to identify a native video source processing mode. A protection mechanism can be provided that achieves this, based on a penalty counter. The penalty counter is initialized to 0 and can have a maximum value of ten, which can be adjusted according to a user's preference. Each time that the detector falls out of telecine-B mode, then the penalty counter is increased by one. If during 100 images (for example) the penalty counter is not increased, then the penalty counter is decreased by one. So, if the detector regularly falls out of telecine-B mode, then the penalty counter will quickly grow towards the maximum value of 10. If the process of falling out of telecine-B mode ceases; then the penalty counter will slowly fall back to 0. If the penalty counter exceeds a threshold value, for example three, then the telecine-B detector will cause the detector to identify a native video source processing mode, even if the detector was previously in telecine-B mode. In some embodiments the penalty counter is only increased if it is determined that the detector falls out of telecine-B mode shortly before a shot change (for example within 25 images), because a shot change can be considered as a natural situation for leaving telecine-B mode.

The detector can temporarily fall out of telecine-B mode, for example due to a shot change in which many images at the end of a shot are identical and the telecine-B pattern cannot be recognized by the detector. In the next shot, the detector may again require some time to detect the telecine-B pattern. To prevent a temporal fallback to processing mode video, a timeout mechanism can be provided. After falling out of telecine-B mode, the detector can maintain an identification of the telecine-B mode for another 150 images (for example) timeout period. If, within the timeout period, the telecine-B pattern is detected again, the identified code can be retained as telecine-B and has not been unnecessarily changed away from telecine-B. Alternatively, if telecine-B mode is not detected again within the timeout, the detector will generate an identifier representative of native video source.

## Claims

1. A method of identifying a periodic pattern of image repetition within a succession of video images comprising.
receiving a signal indicative of one or more difference values that represent a degree of difference between images in the succession of video images;
forming a sequence of difference values; and
processing a subset of the sequence of difference values in order to generate an identifier of the periodic pattern.

2. The method of claim 1, wherein processing the subset of difference values comprises comparing one or more difference values with a plurality of difference value templates representative of known periodic patterns.

3. The method of claim 1 or claim 2, wherein the subset of difference values comprises the minimum number of difference values that are required to uniquely distinguish a periodic pattern.

4. The method any one of claims 1 to 3, wherein the subset of difference values are selected from the sequence of difference values in order to satisfy a balance between accuracy of pattern identification and robustness.

5. The method of any preceding claim, wherein the processing comprises checking for an expected value in a known periodic pattern at specific locations in the sequence of difference values.

6. The method of any preceding claim, wherein the processing comprises counting the number of expected value detections between specific locations in the sequence of difference values.

7. The method of any preceding claim, wherein the processing comprises:
a) processing a first subset of the sequence of difference values if an identity of the current periodic pattern has not been identified; and
b) processing a second subset of the sequence of difference values if an identity of the current periodic pattern has been identified;
wherein the second subset of the sequence of difference values comprises fewer difference values than the first subset of the sequence of difference values.

8. The method of any preceding claim, wherein the processing comprises adjusting the number of difference of difference values in the subset of the sequence of difference values over time.

9. The method of claim 8, wherein the processing comprises increasing the size of the subset if the current identity of the periodic pattern is not confirmed by earlier processing after a predetermined period of time.

10. The method of any preceding claim, further comprising providing a reliability indicator indicative of a calculated reliability of the periodic pattern identity.

11. The method of any preceding claim, further comprising performing a subsequent operation on the succession of video images in accordance with the identified pattern.

12. An apparatus comprising:
a receiver configured to receive a signal indicative of one or more difference values that represent a degree of difference between images in the succession of video images; and
a processor configured to form a sequence of difference values and process a subset of the sequence of difference values in order to identify a periodic pattern of image repetition within the succession of video images.

13. A computer program configured to perform the method of any one of claims 1 to 11, or to configure the apparatus of claim 12.

14. A display data generation device comprising a film detector component comprising the apparatus of claim 12.

15. The display data generation device of claim 14, comprising a television set.
